(19) **Europäisches Patentamt**

**European Patent Office**

**Office européen des brevets**

(11) Veröffentlichungsnummer : **0 355 360 B1**

(12) **EUROPÄISCHE PATENTSCHRIFT**

(45) Veröffentlichungstag der Patentschrift :
**22.01.92 Patentblatt 92/04**

(51) Int. Cl.⁵ : **F01L 1/24,** F01L 1/14, B23P 15/00

(21) Anmeldenummer : **89112537.9**

(22) Anmeldetag : **08.07.89**

(54) **Verfahren zum Herstellen von Tassenstösseln für Hubkolbenmaschinen.**

(30) Priorität : **24.08.88 DE 3828635**

(43) Veröffentlichungstag der Anmeldung :
**28.02.90 Patentblatt 90/09**

(45) Bekanntmachung des Hinweises auf die
Patenterteilung :
**22.01.92 Patentblatt 92/04**

(84) Benannte Vertragsstaaten :
**DE ES FR GB IT**

(56) Entgegenhaltungen :
**DE-A- 2 158 156**
**DE-A- 2 952 290**
**FR-A- 2 074 190**

(73) Patentinhaber : **DAIMLER-BENZ AKTIENGESELLSCHAFT**
**Mercedesstrasse 136**
**W-7000 Stuttgart 60 (DE)**

(72) Erfinder : **Reinhard, Rudolf**
**Breitinger Strasse 18**
**W-7300 Esslingen (DE)**
Erfinder : **Zechmann, Hans**
**Waiblinger Strasse 46**
**W-7053 Kernen (DE)**

**Beschreibung**

Die Erfindung betrifft ein Verfahren zum Herstellen von Tassenstößeln für Hubkolbenmaschinen nach dem Oberbegriff von Anspruch 1, wie es beispielsweise aus der DE-OS 2526656 als bekannt hervorgeht.

Das dort gezeigte Herstellungsverfahren für Stößel ist in erster Linie für solche Stößel vorgesehen, bei denen die Hubbewegung nicht unmittelbar auf den Ventilschaft von Gaswechselventilen, sondern unter Zwischenschaltung von Stößelstangen und Kipphebeln übertragen wird. Bei dem vorbekannten Herstellungsverfahren sind die Druckplatte und der Tassenmantel mittels einer Elektronenstrahlschweißung verschweißt. Zur gegenseitigen Lagesicherung der beiden Einzelteile im noch unverschweißten Zustand ist an der Druckplatte ein kleiner Zapfen bzw. eine kleine Schulter angedreht, auf die der Tassenmantel zentrierend aufgesteckt wird.

Die DE-OS 3540882 zeigt einen Tassenstößel, bei dem die Hubbewegung unmittelbar, also ohne Stößelstangen bzw. Kipphebel auf den Ventilschaft übertragen wird. In den Tassenstößel ist ein hydraulisches Spielausgleichselement integriert. Die dort gezeigte, aus verschleißfestem Werkzeugstahl bestehende Druckplatte weist an ihrem Außenrand eine axial verlaufende Schürze auf, die einen Teil der Mantelfläche des Tassenmantels bildet ; der Druckplattenrohling ist also im wesentlichen ein napfförmiges Gebilde. Die übrigen Teile des dort gezeigten Tassenstößels sind aus kaltfließpreßbarem Stahl hergestellt und mit der napfförmigen Druckplatte mittels einer im Mantelbereich auf etwa mittiger Axialposition liegender Laserschweißnaht verbunden.

Nachteilig an beiden bekannten Herstellungsverfahren ist, daß die verwendeten Schweißverfahren sehr stark zur Rißbildung insbesondere in dem Werkstoff der Druckplatte führen. Es kommt nämlich aufgrund des eng lokalisierten Wärmeeintrages zu einer starken Abschreckwirkung aufgrund des nicht erwärmten Werkstoffes und somit zu einer örtlichen Versprödung des Werkstoffes im Schweißbereich. Trotz der relativ geringen Wärmeverzüge führt dies zu Rissen. Wegen des bei der Elektronenstrahlschweißung erforderlichen Hochvakuums ist dieses Schweißverfahren außerdem recht zeitraubend und erlaubt keine kurzen Taktzeiten. Schließlich ist noch zu erwähnen, daß die nötige Formgebung der vorbekannten Druckplatten lediglich Spanabhebend, also mit einem relativ aufwendigen Formgebungsverfahren erfolgen kann ; darüberhinaus arbeiten zerspanende Formgebungsverfahren mit einem relativ hohen Materialverlust.

Aufgabe der Erfindung ist es, das gattungsmäßig zugrundegelegte Verfahren zur Herstellung von Tassenstößeln unter Beibehaltung, wenn nicht gar unter Reduzierung der Taktzeit dahingehend weiterzuentwickeln, daß Risse an den Tassenstößeln zuverlässig vermieden werden können.

Diese Aufgabe wird erfindungsgemäß durch die kennzeichnende Merkmale von Anspruch 1 gelöst. Dank der Anwendung des an sich bekannten und sehr rationell arbeitenden Reibschweißverfahrens wird eine rißfreie Schweißverbindung zwischen den beiden Einzelteilen erzielbar. Durch die Aufkohlung des Tassenmantels wird eine annähernd gleichmäßige Reibungserwärmung trotz stark unterschiedlicher Werkstoffeigenschaften und Werkstoffquerschnitte erzielt. Dieses Ergebnis einer zuverlässigen, insbesondere rißfreien Schweißverbindung aufgrund einer Aufkohlung muß insofern ganz besonders überraschen, als bereits Kohlenstoffgehalte über etwa 0,25% bereits zu Rißbildungen beim Schweißen führen können. Überraschenderweise ist dieses jedoch beim vorliegenden Anwendungsfall nicht zu beobachten. Dank der Anwendung des Reibschweißverfahrens kann der Druckplattenrohling auch als eine einfache, flachebene Ronde ausgebildet werden, was die Kosten für die Herstellung der Druckplattenrohlinge erheblich reduziert und rationalisiert. Die recht heterogen erscheinenden Einzelmerkmale wirken zu einem gemeinsamen Erfolg zusammen, aufgrund dessen Tassenstößel rißfrei und rationell hergestellt werden können. Insbesondere sind mit dem erfindungsgemäßen Verfahren auch Tassenstößel mit zwei konzentrisch ineinanderliegenden Schweißnähten herstellbar, wie sie für Tassenstößel mit integriertem Spielausgleichselement u.U. wünschenswert sind.

Weitere zweckmäßige Ausgestaltungen der Erfindung können den Unteransprüchen entnommen werden. Im übrigen ist die Erfindung anhand eines in den Zeichnungen dargestellten Ausführungsbeispieles nachfolgend noch erläutert ; dabei zeigen :

| | |
|---|---|
| Figur 1 | einen Teilausschnitt aus dem Zylinderkopf einer Hubkolbenmaschine mit einem Tassenstößel im Einbauzustand, |
| Figur 2 | die schematisierte Herstellung der Ronden für die Druckplatten aus einem Band, |
| Figur 3 | die schematisierte Herstellung der Tassenmantelrohlinge im Kaltfließpreßverfahren mit anschließendem Aufkohlen, |
| Figur 4 | die gegenseitige Ausrichtung vom Tassenmantelrohling und Druckplattenrohling vor dem Zusammenschweißen, |
| Figur 5 | das gegenseitige Reibverschweißen der beiden Teile und |
| Figur 6 | das Entfernen des Überstandes und des äußeren Schweißgrates im Schleifverfahren. |

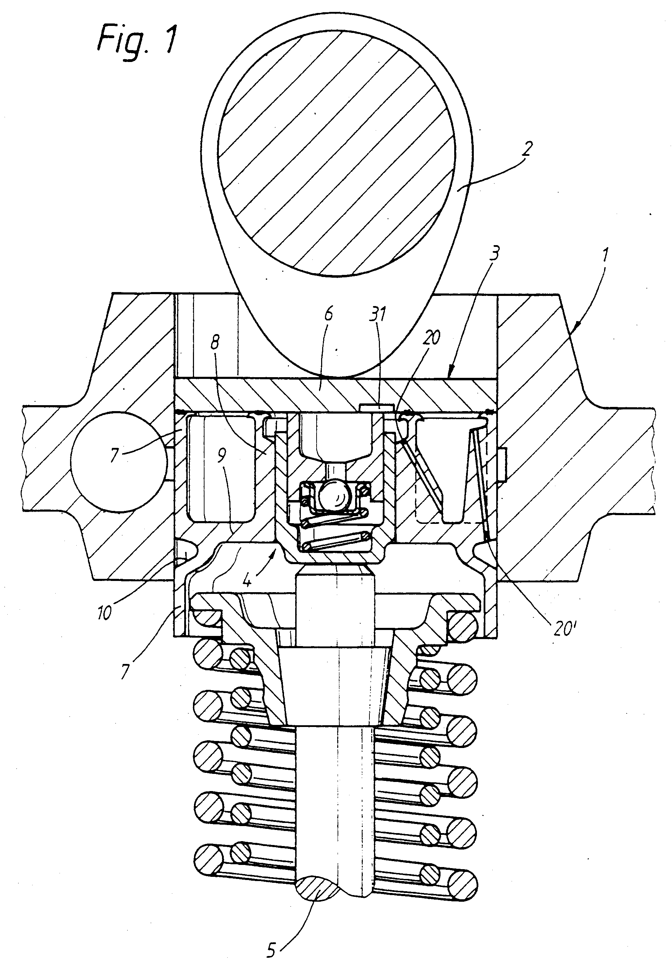

In Figur 1 ist ein Zylinderkopf 1 mit auf ihm drehbar gelagerter Nockenwelle 2 angedeutet. In einer quer zur Nokkenwelle liegenden zylindrischen Bohrung ist der Tassenstößel 3 geführt ; er beaufschlagt unter Zwischenschaltung eines hydraulischen Spielausgleichselementes 4 dem Ventilschaft 5 eines lediglich teilweise dargestellten Gaswechselventiles. Der Tassenstößel 3 besteht — abgesehen von dem bereits erwähnten Spielausgleichselement 4 — im wesentlichen aus einer den Tassenboden bildenden Druckplatte 6 und aus einem äußeren Tassenmantel 7. Zur Unterbringung des kolbenartig gelagerten Spielausgleichselementes 4 ist über einen Zwischenboden 9 noch ein innerer Tassenmantel 8 am Tassenstößel vorgesehen. Über eine Umfangsrille 10 kann dem hydraulischen Spielausgleichselement von einem seitlich liegenden Ölführungskanal Öl, also ein im wesentlichen inkompresibles Druckübertragungsmedium zugeführt werden. Letzteres gelangt von der Umfangsrille 10 über kleine im Tassenmantel 7 bzw. im inneren Tassenmantel 8 integrierte Ölkanäle 20' bzw. 20 zu dem Spielausgleichselement 4 hin. Mit Rücksicht auf die unmittelbare Beaufschlagung des Tassenbodens durch die Nocke der Nockenwelle 2 ist die Druckplatte 6 aus verschleißfestem legierten Werkzeugstahl gebildet. Außerdem ist aus Gründen einer statischen Festigkeit die Druckplatte 6 in ihrer Wandstärke S relativ groß, jedenfalls um ein mehrfaches größer als die Wandstärke s des Tassenmantels 7, der aus Gewichtsgründen möglichst leicht und somit möglichst dünnwandig gestaltet ist. Als Werkstoff für derartige Druckplatten hat sich der legierte Stahl mit der Bezeichnung X 210 CrW 12 bewährt. Der Tassenmantel 7 mit den einstückig daran angeformten anderen Teilen, wie Zwischenboden 9 und innerer Tassenmantel 8 ist mit Rücksicht auf die Herstellbarkeit dieses Teiles im Kaltfließpreßverfahren und auch aus Preisgründen aus einem preiswerten, niedrig gekohlten Stahl hergestellt ; Stähle mit einem Kohlenstoffgehalt unter 0,2% sind in rationeller Weise kaltfließpreßbar.

Sowohl die Druckplatte 6 als auch der Tassenmantel 7, 8 werden zunächst als separate Rohteile gefertigt, wobei — wie gesagt — der Tassenmantelrohling 12 weitgehend im Kaltfließpreßverfahren hergestellt wird. Nach dem Verschweißen der beiden Rohlinge wird dann anschließend der Tassenstößel zuende gefertigt und auf Fertigmaß gebracht.

Grundsätzlich ist das erfindungsgemäße Verfahren auch auf Tassenstößel mit nur einem außenliegenden Tassenmantel 7 und ohne Spielausgleichselement anwendbar. Darüber hinaus ist das erfindungsgemäße Verfahren auch auf Tassenstößel mit integriertem Spielausgleichselement anwendbar, bei denen jedoch der innere Tassenmantel 8 nicht dichtend mit der Druckplatte 6 verbunden zu sein braucht. Als ein besonders schwierig herstellbares Werkstück zeigt jedoch das Ausführungsbeispiel einen solchen Tassenstößel, bei dem zwei einstückig am Tassenmantelrohling angeformte, konzentrisch mit radialem Abstand ineinanderliegende Mantelpartien, nämlich der äußere Tassenmantel 7 und der innere Tassenmantel 8, vorgesehen sind, die axial zueinander bündig enden und die beide dichtend mit der Druckplatte 6 verschweißt werden sollen. Als weitere Erschwernis der Herstellungsaufgabe kommt hinzu — dies gilt im übrigen auch für Tassenstößel mit lediglich einer Schweißnaht —, daß das Verhältnis der Wandstärken s der zu verschweißenden Mantelpartien des Tassenmantels 7 bzw. 8 im Schweißnahtbereich zum einen zur Wandstärke S der Druckplatte 6 zum anderen sehr klein, beim dargestellten Ausführungsbeispiel etwa 0,25 ist. Aufgrund dieses sehr geringen Wandstärkeverhältnisses, zusätzlich aber aufgrund der stark unterschiedlichen Festigkeitseigenschaften der unterschiedlichen Werkstoffe eignet sich der Tassenstößel scheinbar nicht zur Anwendung eines Reibschweißverfahrens, weil die sehr harte und massive Druckplatte bei der Reibungserwärmung die dünnen Mantelpartien verschleißt, ohne sich selber dabei auf Schweißhitze zu erwärmen. Um das Kaltfließpreßverfahren auf die Formgebung des Tassenmantels anwenden zu können, sollte dieser natürlich aus einem relativ weichem Stahl bestehen, der erst recht unter Erwärmung nachgibt. Als im Kaltfließpreßverfahren gut verarbeitbarer Stahl hat sich C 15 bewährt ; auch mit den Stählen 16 MnCr 5 oder 15 Cr 3 sind gute Ergebnisse erzielbar.

Um trotz der Verwendung eines solchen kaltfließpreßbaren Stahles und trotz der großen Wandstärkeunterschiede das zunächst aussichtslos erscheinende Reibschweißverfahren anwenden zu können, wird der Tassenmantelrohling 12 vor dem Verschweißen auf einen Kohlenstoffgehalt von wenigstens 0,3% aufgekohlt. Je höher der Kohlenstoffgehalt, umso besser ; jedoch wird man mit Rücksicht auf Zeit- und Erergiekosten versuchen, die Aufkohlung so gering wie möglich zu halten. Eine Aufkohlung auf 0,6% Kohlenstoffgehalt hat bei einem praktisch ausgeführten Beispiel zu brauchbaren Ergebnissen, insbesondere zu einer einwandfreien Reibverschweißung geführt. Dies muß insofern besonders paradox erscheinen, als man bei Schweißungen ungeachtet der Art des Schweißverfahrens stets höhere Kohlenstoffgehalte an den beteiligten Stahlwerkstücken vermieden hat. Rißbildungen sind spätestens ab einem Kohlenstoffgehalt von 0,25% zu erwarten und nehmen mit zunehmendem Kohlenstoffgehalt zu. Was die Aufkohlungstiefe beim Aufkohlen anlangt, so sollten wenigstens etwa 30% der im Anschweißbereich vorliegenden Wandstärke s des Tassenmantels erfaßt werden, so daß lediglich ein mittlerer unaufgekohlter Bereich von etwa 40% übrig bleibt. Am zweckmäßigsten ist es, die Aufkohlung bis zur Mitte der Wandung voranzutreiben, so daß die Aufkohlungstiefe t etwa 50% der Wandstärke s beträgt. Das Aufkohlen der Tassenmantelrohlinge 12 kann ohne weiteres im Schüttgutverfahren, also unter Wirrlage der Tassenmantelrohlinge erfolgen, was ein rationelles und billiges Verfahren ist. Im Anschluß an das Aufkohlen werden die Tassenmantelrohlinge auf Raumtemperatur abgekühlt. Zwar ist auch ein Reibschweißen in gehärtetem Zustand der Tassenmantel möglich jedoch werden bessere Schweißergebnisse in lediglich aufgekohltem Zustand und langsamer Abkühlung aus der Aufkohlungstemperatur wenigstens bis zur Austenitisierungstemperatur erzielt.

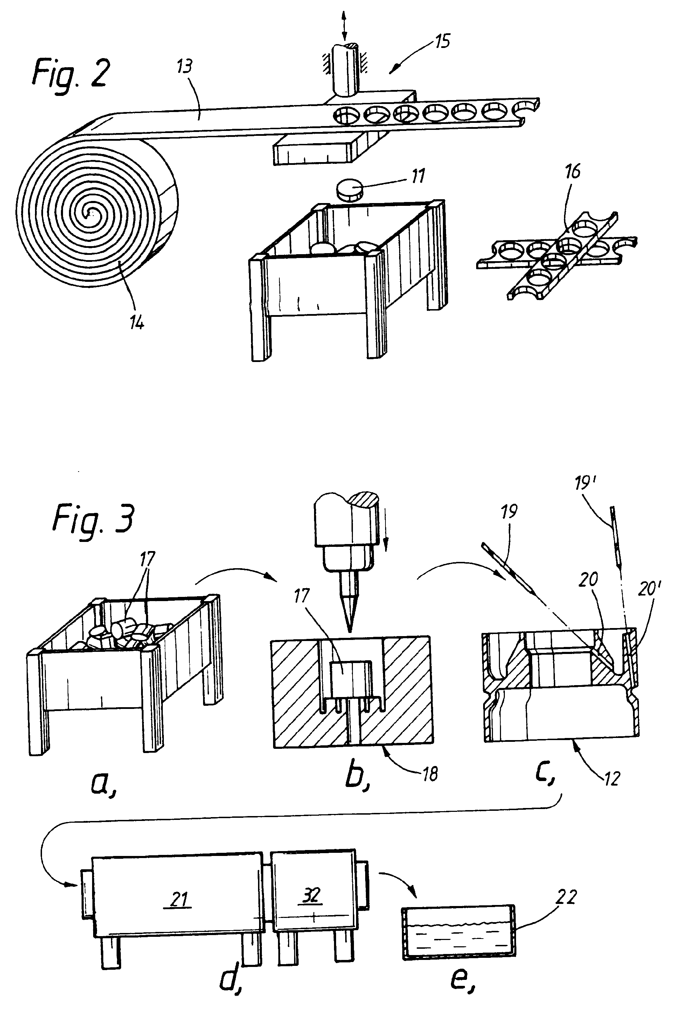

Unter Bezugnahme auf Figur 3 mit ihren unterschiedlichen Einzeldarstellungen sei nachfolgend noch das Herstellungsverfahren der Tassenmantelrohlinge 12 kurz erläutert. Zunächst werden aus rundem Stangenmaterial eines geeigneten Werkstoffes, beispielsweise aus C 15 Bolzen 17 abgelängt, die als Rohlinge für die Herstellung der Tassenmantelrohlinge dienen können. Es kann sich dabei unter Umständen bereits um hohle Bolzen bzw. um dickwandige Rohrabschnitte handeln. Diese werden in ein Kaltfließpreßwerkzeug 18 lagedefiniert eingesetzt und durch einen ein- oder mehrstufigen Kaltfließpreßvorgang in die gewünschte Form gepreßt. Bei komplizierten Formen kann unter Umständen auch ein Zwischenglühen erforderlich werden. Die Einzelheiten dafür können hierbei als bekannt unterstellt werden. Vor dem Zusammenschweißen des Tassenmantelrohlings 12 mit der Druckplatte müssen noch die Ölkanäle 20 und 20′ gebohrt werden, wie dies in Figur 3 c durch die Bohrer 19 und 19′ angedeutet ist, weil die Ölkanäle 20 und 20′ später nicht mehr axial durch Bohrwerkzeuge zugänglich sind. Wichtig für den einwandfreien Betrieb des Tassenstößels ist im übrigen auch, daß sämtliche Hohlräume absolut partikelfrei sind. Die Umfangsrille 10 kann im Kaltfließpreßverfahren eingerollt, sie kann aber auch spanabhebend eingedreht werden.

In jedem Fall muß der Tassenmantelrohling 12 bis auf einige im Schleifverfahren erzeugbare Endmaße im noch weichen Zustand fertigbearbeitet werden. Anschließend werden die solcherart vorbereiteten Tassenmantelrohlinge in Stahlkörbe geschüttet und in einen Durchstoßofen mit aufkohlend wirkenden Gasatmosphäre gegeben, wie dies im Bildteil nach Figur 3d durch den Aufkohlungsofen 21 symbolisiert ist. Selbstverständlich ist anstelle eines Durchstoßofens auch ein Kammerofen verwendbar. Nach Austritt der Körbe mit den darin enthaltenen aufgekohlten Tassenmantelrohlingen aus dem Ofen 21 werden diese bei dem im Bildteil nach Figur 3d dargestellten Ausführungsbeispiel in eine unbeheizte aber mit dem gleichen als Schutzgas wirksamen Gas wie im Ofen 21 gefüllten Abkühlkammer 32 eingeschleust, in der die Tassenmantelrohlinge langsam auf eine Temperatur unterhalb der Austenitisierungstemperatur abkühlen können. Zur Beschleunigung der weiteren Abkühlung und zur Verhinderung eines Verzunderns können die Teile in ein vorzugsweise mit Wasser gefülltes Abschreckbad 22 getaucht werden, wobei trotz der raschen Abkühlung in der letzten Abkühlungsstufe die Teile im aufgekohlten Bereich mäßig hart bleiben.

Mit Rücksicht auf die genaue gegenseitige Ausrichtung der zu verschweißenden Teile beim Reibschweißverfahren in der dazu erforderlichen Schweißvorrichtung kann auf eine gegenseitige Zentrierung der Teile durch entsprechende Schultern an der Druckplatte verzichtet werden ; eine entsprechende Zentrierschulter wäre sogar schädlich beim Reibschweißen, weil dadurch eine freie Ausbildung des Schweißgrates behindert würde. Der Druckplattenrohling 11 kann also als eine im Schweißbereich flachebene Ronde ausgebildet sein. Dadurch läßt sich der Druckplattenrohling 11 in rationeller Weise und vor allen Dingen auch in werkstoffsparender Weise aus einem Band — Band 13 in Figur 2 — oder auch aus einer Blechtafel ausstanzen. Trotz der hohen Festigkeit des verwendeten Werkstoffes ist ein einfaches Stanzwerkzeug zum Ausstanzen einer runden Scheibe durchaus vertretbar, auch wenn es in relativ kurzen Intervallen bezüglich seiner Schneidgarnitur angeschärft bzw. erneuert werden muß. Mit Rücksicht auf die Möglichkeit, den Druckplattenrohling 11 beim Reibschweißen sicher zu spannen, wird der Außendurchmesser D des Druckplattenrohlinges um etwa 5 bis 15% größer gewählt als der Außendurchmesser d des Tassenmantelrohlings 12. Es muß dafür Sorge getragen werden, daß radial außerhalb und radial innerhalb der ringförmigen Schweißnaht 27 bzw. 28 sich behinderungsfrei ein im Querschnitt hakenförmiger Schweißgrat 29 ausbilden kann. Bedarfsweise kann die Ronde eine von der Kreisform abweichende Außenkontur aufweisen, um sie formschlüssig in Umfangsrichtung fixieren zu können. Der Überstand 30 des Druckplattenrohlings 11 gegenüber dem Tassenmantelrohling 12 hat außerdem aber noch einen anderen Grund : Im Bereich dieses relativ großen Überstandes sind etwaige Spannungsrisse und Deformationen enthalten, die auf das Stanzen der Ronden zurückgehen und die sich beim Schweißen u.U. noch fortsetzen können. Sie gehen jedoch vom Außenumfang der Ronde aus und sind auf den Bereich des Überstandes beschränkt ; sie erreichen nicht Partien im unmittelbaren radialen Bereich der äußeren Schweißnaht 28. Diese etwaigerweise rißbehafteten Partien im Bereich des Überstandes 30 werden jedoch während eines der letzten Arbeitsvorgänge beseitigt, so daß das verbleibende Werkstück völlig rißfrei ist.

Nachfolgend sei noch kurz anhand von Figur 2 auf die Herstellung der Ronden eingegangen : ein zu einem Wickel 14 aufgewickeltes Band 13 wird einer schematisch angedeuteten Stanze 15 zugeführt, in der unter schrittweisem Vorschub des Bandes 13 taktweise die Ronden 11 ausgestanzt und in einer Kiste gesammelt werden. Der übrigbleibende gelochte Materialstreifen wird durch eine anschließende, jedoch nicht dargestellte Schere in handliche Stücke zerteilt und als ein relativ wertvoller rezyklierbarer Schrott gesammelt. Der Materialabfall dabei ist wesentlich geringer, als wenn die Druckplattenrohlinge 11 spanabhebend von einer runden Stange gedreht werden müßten. Vor dem Zusammenschweißen muß lediglich noch eine kleine, exzentrisch auf der Innenseite der Druckplatte angeordnete Eintiefung 31 angebracht werden, was durch einen Prägevorgang oder auch spanabhebend erfolgen kann. Beim fertigen Tassenstößel muß die Druckplatte 6 gehärtet sein, während der Anlieferungszustand des Ausgangsmaterials für die Druckplattenrohlinge normalgeglüht ist. Das erforderliche Härten der Druckplatte kann im Zustand der Druckplattenrohlinge, also vor dem Reibschweißen oder im verschweißten Zustand erfolgen, wobei der Tassenmantel 7, 8 diesen Verfahrensschritt zwangsläufig mit durchlaufen müßte. In beiden Fällen sind zufriedenstellende Schweißergebnisse erzielbar.

Die solcherart vorbereiteten Rohlinge, nähmlich Druckplattenrohling 11 zum einen und Tassenmantelrohling 12 zum anderen, werden paarweise in die entsprechenden Spannfutter 23 für den Druckplattenrohling 11 bzw. Spannfutter 25 für den Tassenmantelrohling 12 einer Reibschweißmaschine eingespannt. Die Teile sind dabei genau konzentrisch zueinander ausgerichtet und mit hoher Kraft in den entsprechenden Futtern festgehalten, so daß sie weder in Umfangsrichtung, noch in Axialrichtung rutschen bzw. ausweichen können. Unter Rotation wenigstens eines der Teile gegenüber dem anderen oder unter jeweils entgegengesetzter Drehrichtung werden die Teile mit hoher Geschwindigkeit angetrieben und axial zusammengepreßt, wobei sie sich reibungsbedingt sehr stark erwärmen und teigigen, schweißbaren Zustand erreichen. Dabei bilden sich — wie gesagt — an den Mantelpartien 7 und 8 im Querschnitt hakenförmige Schweißgrate aus. Dank der Aufkohlung der Tassenmantelrohlinge erreicht auch die Druckplatte an den Schweißstellen die erforderliche Schweißtemperatur. Nach Erreichen dieser Schweißtemperatur werden die Teile sehr rasch zum Stillstand abgebremst und axial mit hoher Kraft zusammengepreßt, so daß eine Preßschweißung zustande kommt.

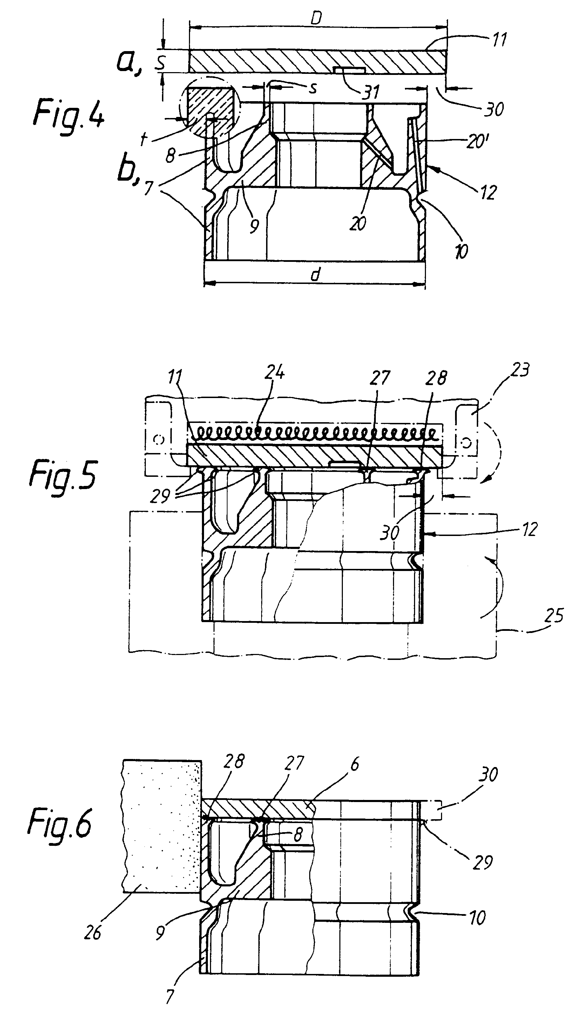

Trotz der Aufkohlung des Tassenmantelrohlings vor dem Reibschweißen ist dieser dennoch sowohl hinsichtlich der Festigkeitseigenschaften seines Werkstoffes als auch hinsichtliches seines Werkstückquerschnittes gegenüber dem in dieser Hinsicht sehr harten und massiven Druckplattenrohling benachteiligt. Um diese Benachteiligung des Tassenmantelrohlings 12 bei der Erwärmung zu kompensieren, ist es zweckmäßig den Druckplattenrohling 11 unmittelbar vor dem Reibschweißen vorzuwärmen. Dies kann — wie es in Figur 5 beispielsweise angedeutet ist — durch eine im Spannfutter 23 integrierte Heizung, die dort durch eine Heizwendel 24 realisiert ist, bewerkstelligt werden. Stattdessen oder auch zusätzlich dazu kann in unmittelbarer Nachbarschaft zu dem Spannfutter 23 ein beheizbares Magazin für Druckplattenrohlinge 11 vorgesehen sein, aus dem sehr rasch und bei kurzen Transportwegen jeweils ein Rohling in das Spannfutter 23 überführt werden kann. Bei der erwähnten Werkstoffpaarung und der als zweckmäßig herausgefundenen Aufkohlung hat sich eine relativ mäßige Vorwärmung auf etwa 150 bis 350°C, insbesondere eine Vorwärmung auf etwa 300°C bewährt.

Die gleichmäßige Vorwärmung des Druckplattenrohlings kompensiert nicht nur bei der reibungsbedingten Werkstückerwärmung auf Schweißhitze eine gewisse diesbezügliche Benachteiligung des Tassenmantelrohlings 12, sondern gleicht auch ein Temperaturgefälle innerhalb des in dieser Hinsicht besonders gefährdeten Druckplattenrohlings 11 aus, weil der dafür verwendete Werkstoff einen besonders hohen Kohlenstoffgehalt hat. Auch die Reibschweißung selber trägt mit dazu bei, daß die unvermeidlicherweise auftretenden Temperaturgradienten nur mäßig sind, weil durch die Reibungserwärmung Wärme weiträumig in die beteiligten Werkstücke hineingetragen wird. Dank dieses mäßigen Temperaturgradienten beim Reibschweißen ist die Gefahr einer Rißbildung weitgehend vermieden, obwohl der Tassenmantelrohling 12 in einen Bereich aufgekholt wurde, in dem er normalerweise beim Schweißen zu Rissen führen würde. Um zur Vermeidung von Rissen ein Übriges zu tun, kann der fertiggeschweißte Tassenstößel nach der Reibschweißung unmittelbar aus der Schweißwärme heraus angelassen werden. Und zwar wird man die Tassenstößel etwa 2,5 bis 3,5 Stunden lang auf etwa 450 bis 550°C nachwärmen, also anlassen. Als zweckmäßig hat sich hier ein Anlassen auf 500°C während einer Zeitdauer von 3 Stunden bewährt. Allerdings ist die Einhaltung dieser Parameter nicht besonders kritisch. Beispielsweise lassen sich bei einem Durchlaufofen bestimmte Behandlungszeiten und wegen eines unvermeidlichen Temperaturabfalls im Bereich der Beschickungs- bzw. Entnahmeöffnungen auch exakte Behandlungstemperaturen ohnehin nicht genau einhalten. In jedem Falle sollte sichergestellt werden, daß — wenn schon eine Nachwärmung angewandt werden soll — eine Zwischenabkühlung zwischen Schweißwärme und Nacherwärmung vermieden wird. Nachdem die Teile jedoch relativ klein sind und sich an der Umgebungsluft dementsprechend relativ rasch abkühlen können, ist ggf. ein rasches Überführen der Werkstücke aus der Reibschweißmaschine in den Anlaßofen angezeigt.

Um den Überstand 30 des mit dem Tassenmantelrohling 12 verschweißten Druckplattenrohlings 11 sowie den äußeren Schweißgrat 29 entfernen zu können, ist gemäß Figur 6 ein Umfangsschliff mittels einer Schleifscheibe 26 vorgesehen. In noch ungehärtetem Zustand des Druckplattenrohlings könnte dieser u.U. auch abgedreht werden, jedoch ist das letzte, nahe an der äußeren Schweißnaht 28 liegende Teilstück des Überstandes allein durch den Schweißvorgang sehr hart und muß in jedem Fall geschliffen werden. Der auch ohne Härtung relativ zähe und hochfeste Werkstoff der Druckplatte 6 ist rationell und zuverlässig am besten durch einen Schleifvorgang abtragbar, was zur Vermeidung einer unnötigen Werkstofferwärmung und um hohe Abtragsleistungen zulassen zu können, am besten im Naßschliffverfahren geschieht. Zweckmäßigerweise handelt es sich dabei um einen Schruppschliff mit einer relativ grobkörnigen Schleifscheibe 26. Sofern die Druckplatte nicht bereits als Rohteil gehärtet wurde, muß dies — wie gesagt — vor ihrer Fertigbearbeitung als Komplett-Teil nachgeholt werden. Die Feinbearbeitung und das Anschleifen des fertigen Endmaßes im Durchmesserbereich kann durch einen anschließenden Feinschliff erfolgen. Die mit der Nockenwelle zusammenarbeitende Oberseite der Druckplatte kann anschließend auch ggf. ballig geschliffen werden, wenn dies gewünscht wird.

**Patentansprüche**

1. Verfahren zum Herstellen von Tassenstößeln für Hubkolbenmaschinen,
— die Tassenstößel bestehen aus einer den Tassenboden bildenden Druckplatte aus verschleißfestem, legiertem Werkzeugstahl mit einer um ein mehrfaches größeren Wandstärke als der Wandstärke des Tassenmantels und
— aus einem mit der Druckplatte verschweißten Tassenmantel aus preiswertem und aufgrund eines geringen Kohlenstoffgehaltes von weniger als 0,2% kaltfließpreßbarem Stahl,
bei dem die Druckplatte und der Tassenmantel als separate Rohteile — der Tassenmantel weitgehend im Kaltfließpreßverfahren — gefertigt, beide in der gewünschten Relativlage miteinander verschweißt werden und anschließend der Tassenstößel fertig bearbeitet wird, **gekennzeichnet** durch die Kombination mit folgenden Merkmalen :
a) der Rohling (11) der Druckplatte (6) ist als eine auch im Schweißbereich flachebene Ronde ausgebildet, deren Außendurchmesser (D) um etwa 5 bis 15% größer als der Außendurchmesser (d) des Rohlings (12) des Tassenmantels (7) ist ;
b) der Rohling (12) des Tassenmantels (7) wird vor dem Verschweißen (Figur 5) auf einen Kohlenstoffgehalt von wenigstens 0,3% aufgekohlt (Figur 3d) bei einer Aufkohlungstiefe (t) von wenigstens etwa 30% der im Anschweißbereich vorliegenden Wandstärke (s) des Tassenmantels (7, 8) ;
c) das Verschweißen wird in einen vorzugsweise rotierend arbeitenden Reibschweißverfahren (Figur 5) durchgeführt, wobei der Druckplattenrohling (11) an dem radial über den Tassenmantelumfang überstehenden Bereich (Überstand 30) gespannt wird ;
d) der radiale Überstand (30) des Druckplattenrohlings (11) und der äußere Schweißgrat (29) werden spanabhebend vorzugsweise durch Schleifen (Figur 6) entfernt.

2. Verfahren nach Anspruch 1, **dadurch gekennzeichnet,** daß zwei einstückig am Tassenmantelrohling (12) angeformte, konzentrisch mit radialem Abstand ineinander liegende, axial zueinander bündig endende Mantelpartien (innerer und äußerer Tassenmantel 7, 8) des Tassenmantelrohlings (12) gleichzeitig mit dem Druckplattenrohling (12) reibverschweißt werden.

3. Verfahren nach Anspruch 1 oder 2, **dadurch gekennzeichnet,** daß das Wandstärkeverhältnis der zu verschweißenden Mantelpartie des Tassenmantels (Wandstärke s) im Schweißnahtbereich zur Druckplatte (Wandstärke S) geringer als ein Drittel ist.

4. Verfahren nach Anspruch 1, 2 oder 3, **dadurch gekennzeichnet,** daß der Tassenmantelwerkstoff 16 MnCr 5 oder 15 Cr 3 ist.

5. Verfahren nach Anspruch 1, 2 oder 3, **dadurch gekennzeichnet,** daß der Tassenmantelwerkstoff C 15 ist.

6. Verfahren nach einem der Ansprüche 1 bis 5, **dadurch gekennzeichnet,** daß die Ronde des Druckplattenrohlings (11) aus einem Band (13) oder einer Blechtafel ausgestanzt ist (Figur 2).

7. Verfahren nach einem der Ansprüche 1 bis 6, **dadurch gekennzeichnet,** daß der Druckplattenwerkstoff X 210 CrW 12 ist.

8. Verfahren nach einem der Ansprüche 1 bis 7, **dadurch gekennzeichnet**, daß das Aufkohlen der Tassenmantelrohlinge (12) im Schüttgutverfahren, also unter Wirrlage der Tassenmantelrohlinge (12) erfolgt (Figur 3d).

9. Verfahren nach einem der Ansprüche 1 bis 8, **dadurch gekennzeichnet,** daß die Tassenmantelrohlinge (12) auf einen Kohlenstoffgehalt von 0,6% aufgekohlt werden.

10. Verfahren nach einem der Ansprüche 1 bis 9, **dadurch gekennzeichnet,** daß der Tassenmantelrohling (12) auf eine Aufkohlungstiefe (t) von etwa 50% der im Anschweißbereich vorliegenden Wandstärke (s) des Tassenmantels (7, 8) aufgekohlt wird.

11. Verfahren nach einem der Ansprüche 1 bis 10, **dadurch gekennzeichnet,** daß die Tassenmantelrohlinge (12) nach dem Aufkohlen auf Raumtemperatur abgekühlt werden.

12. Verfahren nach Anspruch 11, **dadurch gekennzeichnet,** daß das Abkühlen von der Aufkohlungstemperatur wenigstens bis zur Austenitisierungstemperatur langsam erfolgt.

13. Verfahren nach einem der Ansprüche 1 bis 12, **dadurch gekennzeichnet,** daß die Druckplattenrohlinge (11) unmittelbar vor dem Reibschweißen (Figur 5) auf etwa 150 bis 350°C, vorzugsweise auf etwa 300°C vorgewärmt werden (Heizwendel 24 im Spannfutter 23).

14. Verfahren nach einem der Ansprüche 1 bis 13, **dadurch gekennzeichnet,** daß die geschweißten Tassenstößel nach dem Reibschweißen (Figur 5) unmittelbar aus der Schweißwärme heraus angelassen werden.

15. Verfahren nach einem der Ansprüche 1 bis 14, **dadurch gekennzeichnet,** daß das Abschleifen des radialen Überstandes (30) der Druckplatte (6) und des Schweißgrates (29) im Naßschliffverfahren erfolgt.

## Claims

1. A method of producing cup tappets for reciprocating piston engines,
— the cup tappets consist of, forming the cup crown, a thrust plate of wear-resistant alloyed tool steel with a wall thickness many times greater than the wall thickness of the cup shell, and
— welded to the thrust plate, a cup shell of inexpensive steel which can be cold extruded by virtue of having a carbon content of less than 0.2%,
in which the thrust plate and the cup shell are produced as separate crude parts — the cup shell being produced substantially by a cold extrusion process, both are welded together in the desired relative position and then the cup tappet is machine finished, characterised by the combination with the following features:
a) the blank (11) of the thrust plate (6) is constructed as a circular disc which is plane in the welding area and the outside diameter (D) of which is about 5 to 15% greater than the outside diameter (d) of the blank (12) of the cup shell (7) ;
b) prior to welding (Fig. 5), the blank (12) of the cup shell (7) is carburised up to a carbon content of at least 0.3% (Fig. 3d) with a carburisation depth (t) of at least about 30% of the wall thickness (s) of the cup shell (7, 8) present in the welding area ;
c) welding is carried out in a preferably rotatingly operating friction welding process (Fig. 5), the pressure plate blank (11) being clamped at the portion (overhang 30) which projects beyond the cup shell periphery;
d) the radial overhang (30) of the thrust plate blank (11) and the external welding burr (29) are removed by a machining process, preferably by grinding (Fig. 6).

2. A method according to claim 1, characterised in that two shell parts (inner and outer cup shell 7, 8) of the cup shell blank (12) which are integrally formed on the cup shell blank (12), being disposed concentrically one inside the other and with a radial gap and ending axially flush with each other are simultaneously friction welded to the thrust plate blank (12).

3. A method according to claim 1 or 2, characterised in that the wall thickness ratio of the shell part of the cup shell which is to be welded (wall thickness s) is less than one-third in the area of the seam, in relation to the thrust plate (wall thickness S).

4. A method according to claim 1, 2 or 3, characterised in that the cup shell material is 16 MnCr 5 or 15 Cr 3.

5. A method according to claim 1, 2 or 3, characterised in that the cup shell material is C 15.

6. A method according to one of claims 1 to 5, characterised in that the circular disc of the thrust plate blank (11) is stamped from a strip (13) or a sheet metal plate (Fig. 2).

7. A method according to one of claims 1 to 6, characterised in that the thrust plate material is X 210 CrW 12.

8. A method according to one of claims 1 to 7, characterised in that carburisation of the cup shell blanks (12) takes place by a bulk process, in other words with the cup shell blanks (12) in a random arrangement (Fig. 3d).

9. A method according to one of claims 1 to 8, characterised in that the cup shell blanks (12) are carburised to a carbon content of 0.6%.

10. A method according to one of claims 1 to 9, characterised in that the cup shell blank (12)is carburised to a depth (t) of about 50% of the wall thickness (s) in the welding zone of the cup shell (7, 8).

11. A method according to one of claims 1 to 10, characterised in that after carburisation, the cup shell blanks (12) are cooled to room temperature.

12. A method according to claim 11, characterised in that cooling from carburisation temperature at least down to austenitising temperature takes place slowly.

13. A method according to one of claims 1 to 12, characterised in that immediately prior to friction welding (Fig. 5), the thrust plate blanks (11) are preheated to about 150 to 350°C and preferably to about 300°C (heating coil 24 in the chuck 23).

14. A method according to one of claims 1 to 13, characterised in that following friction welding (Fig. 5), the welded cup tappets are tempered directly from the welding heat.

15. A method according to one of claims 1 to 14, characterised in that the radial overhang (30) on the thrust plate (6) and the external welding burr (29) are removed by a wet grinding process.

**Revendications**

1. Procédé de fabrication de poussoirs en forme de cuvettes pour moteurs à pistons alternatifs,
— les poussoirs en forme de cuvettes se composant d'une part d'une plaque de pression, formant le fond de cuvette, constituée d'un acier à outil, allié et résistant à l'usure, et ayant une épaisseur de paroi plusieurs fois supérieure à l'épaisseur de paroi de la jupe de cuvette, et d'autre part d'une jupe de cuvette, soudée sur la plaque de pression et constituée d'un acier peu coûteux et extrudable à froid grâce à une faible teneur en carbone inférieure à 0,2%,
— procédé dans lequel la plaque de pression et la jupe de cuvette sont fabriquées comme des pièces brutes séparées — la jupe de cuvette dans une large mesure par un procédé d'extrusion à froid —, qui sont soudées ensemble dans la disposition relative désirée, et ensuite la jupe de cuvette est usinée en finition,
— procédé caractérisé par la combinaison des particularités suivantes :
(a) l'ébauche (11) de la plaque de pression (6) est réalisée sous forme d'un disque, plan également dans la zone de soudure et dont le diamètre extérieur (D) est supérieur d'environ 5 à 15% au diamètre extérieur (d) de l'ébauche (12) de la juge de cuvette (7) ;
(b) l'ébauche (12) de la jupe de cuvette (7) est cémentée avant le soudage (Figure 5) à une teneur en carbone d'au moins 0,3% (Figure 3d), avec une profondeur de cémentation (t) d'au moins environ 30% de l'épaisseur de paroi (s) de la jupe de cuvette (7, 8) dans la zone de soudure ;
(c) le soudage est effectué dans un processus de soudage par friction en opérant de préférence par rotation (Figure 5), l'ébauche (11) de la plaque de pression étant alors serrée dans la zone située radialement au-dessus du pourtour de la jupe de cuvette (dépassement 30) ;
(d) le dépassement radial (30) de l'ébauche (11) de la plaque de pression et la bavure extérieure de soudure (29) sont enlevés par usinage, de préférence par meulage (Figure 6).

2. Procédé selon la revendication 1, caractérisé en ce que deux parties de jupe (jupes intérieure et extérieure 7, 8 de la cuvette) de l'ébauche (12) de jupe de cuvette, qui sont formées d'un seul tenant dans l'ébauche (12) de jupe de cuvette et qui sont situées concentriquement l'une dans l'autre avec espacement radial, sont soudées par friction simultanément avec l'ébauche (11) de la plaque de pression.

3. Procédé selon la revendication 1 ou 2, caractérisé en ce que le rapport entre les épaisseurs de parois de la partie à souder de la jupe de cuvette (épaisseur de parois s) et de la plaque de pression dans la zone du joint de soudure (épaisseur de paroi S) est inférieur à un tiers.

4. Procédé selon la revendication 1, 2 ou 3, caractérisé en ce que le matériau de la jupe de cuvette est 16 MnCR 5 ou 15 CR 3.

5. Procédé selon la revendication 1, 2 ou 3, caractérisé en ce que le matériau de la jupe de cuvette est C 15.

6. Procédé selon l'une des revendications 1 à 5, caractérisé en ce que le disque de l'ébauche (11) de plaque de pression est poinçonné dans une bande (13) ou un panneau de tôle (Figure 2).

7. Procédé selon l'une des revendications 1 à 6, caractérisé en ce que le matériau de la plaque de pression est X 210 CrW 12.

8. Procédé selon l'une des revendications 1 à 7, caractérisé en ce que la cémentation des ébauches (12) de jupes de cuvettes est effectuée dans un processus de traitement en vrac, c'est-à-dire avec disposition en vrac des ébauches (12) de jupes de cuvettes (Figure 3d).

9. Procédé selon l'une des revendications 1 à 8, caractérisé en ce que les ébauches (12) de jupes de cuvettes sont cémentées à une teneur en carbone de 0,6%.

10. Procédé sel on l'une des revendications 1 à 9, caractérisé en ce que l'ébauche (12) de jupe de cuvette est cémentée à une profondeur de cémentation (t) d'environ 50% de l'épaisseur de paroi (s) existant dans la zone de soudure, de la jupe de cuvette (7, 8).

11. Procédé selon l'une des revendications 1 à 10, caractérisé en ce que les ébauches (12) de jupes de cuvettes sont refroidies à la température ambiante après la cémentation.

12. Procédé selon la revendication 11, caractérisé en ce que le refroidissement est effectué lentement depuis la température de cémentation au moins jusqu'à la température d'austénitisation.

13. Procédé selon l'une des revendications 1 à 12, caractérisé en ce que les ébauches (11) de plaques de pression sont préchauffées (enroulement chauffant 24 dans le mandrin de serrage 23), immédiatement avant le soudage par friction (Figure 5) jusqu'à environ 150 à 350°C, de préférence jusqu'à environ 300°C.

14. Procédé selon l'une des revendications 1 à 13, caractérisé en ce que les poussoirs en forme de cuvettes soudés sont soumis, après le soudage par friction (Figure 5), à un revenu en opérant directement au moyen de la chaleur de soudage.

15. Procédé selon l'une des revendications 1 à 14, caractérisé en ce que l'enlèvement par meulage du dépassement radial (30) de la plaque de pression (6) et de la bavure de soudure (29) est effectué par un processus de meulage en voie humide.

Fig. 1

Fig. 2

Fig. 3

a,   b,   c,

d,   e,

Fig.4

Fig.5

Fig.6